# EUROPEAN PATENT APPLICATION

(11) **EP 1 081 837 A1**
(43) Date of publication of application: **07.03.2001**
(21) Application number: 99202816.7
(22) Date of filing: 31.08.1999
(51) Int. Cl.: H02M 3/137

(54) **Power supply circuit**

(71) Applicant: Koninklijke Philips Electronics N.V., 5621 BA Eindhoven (NL)
(72) Inventor: Smidt, Pieter Jan Mark, Prof. Holstlaan 6, 5656 AA Eindhoven (NL); Tolle, Tobias, Prof. Holstlaan 6, 5656 AA Eindhoven (NL)
(74) Representative: Steenbeek, Leonardus Johannes

(57) **Abstract**

In a power supply circuit, comprising a rectifier unit (D) for rectifying an AC mains voltage (Vm), a thyristor (T) coupled across first and second outputs of the rectifier unit (D), and a thyristor control circuit (T1, T1', Rb) for controlling the thyristor (T) in such a manner, that the thyristor (T) is switched on when a voltage over the thyristor (T) is substantially zero, the thyristor control circuit (T1, T1', Rb) includes a transistor (T1, T1') having a main current path between a control terminal of the thyristor (T) and the first output of the rectifier unit, and a resistor (Rb) between a control terminal of the transistor (T1, T1') and the second output of the rectifier unit (D).

## Description

The invention relates to a power supply circuit.

EP-A-0,030,266 discloses a transformer-less power supply that is used to supply a reduced DC operating voltage from an AC supply voltage to an electronic device with a low current requirement. The AC supply voltage is connected via a reactance to a two-way rectifier. The rectifier supplies the DC power via a diode to a storage capacitor that, in turn supplies power to the electronic device. A controlled switch in the form of a thyristor is connected in parallel to the output of the two-way rectifier. The thyristor, which is controlled by a zener diode, is arranged to close when a predetermined voltage at the storage device is exceeded thus short-circuiting the rectifier and isolating the capacitor from the power supply. As soon as the current through the thyristor drops below the self-holding value, the thyristor opens once more and the storage capacitor is once again charged by the output from the two-way rectifier. Switching the thyristor on at a voltage exceeding a predetermined voltage is disadvantageous from an interference and dissipation point of view.

EP-B-0,324,904 shows a power supply circuit in which the controlled switch is a power transistor. This power transistor is controlled by a control device in such a manner, that at the switching time of the semiconductor switch, the product of current times voltage is always extremely low, so that radio interference is avoided. In switching into the current-conducting state at the end of a voltage half-wave, both current and voltage are very low. At the moment of switching into the off state, the current is high but the voltage is very low so that only slight dissipation occurs. The switching-on time instants for the semiconductor switch may be effected depending on the AC voltage fed to the rectifier bridge circuit, with for example the zero passages determining the switching time. The positive pole of the rectifier bridge circuit is connected to the input of a first threshold stage (a Schmitt trigger), to which a very low reference voltage is applied. The output of the first threshold stage is connected to the setting input of a flip-flop, the output of which is connected to the control input (base) of the semiconductor switch (transistor). A diode is connected between the positive pole of the rectifier bridge circuit and the output capacitor to prevent discharge of the output capacitor via the semiconductor switch. The output voltage at the output capacitor is fed to an input of a second threshold stage (also a Schmitt trigger), the output of which is connected to the resetting input of the flip-flop. A second reference voltage corresponding to a preset setpoint value is applied to the second threshold stage. To prevent current overload of the rectifier assembly, at least a resistor is connected between the mains connection and the semiconductor switch.

It is, inter alia, an object of the invention to provide an improved power supply circuit, in which switching at a low voltage is achieved by means of a very simple control circuit. To this end, the invention provides a power supply circuit as defined in the independent claim. Advantageous embodiments are defined in the dependent claims.

In a preferred embodiment of the power supply circuit, comprising a rectifier unit for rectifying an AC mains voltage, a thyristor coupled across first and second outputs of the rectifier unit, and a thyristor control circuit for controlling the thyristor in such a manner, that the thyristor is switched on when a voltage over the thyristor is substantially zero, the thyristor control circuit includes a transistor having a main current path between a control terminal of the thyristor and the first output of the rectifier unit, and a resistor between a control terminal of the transistor and the second output of the rectifier unit.

These and other aspects of the invention will be apparent from and elucidated with reference to the embodiments described hereinafter.

In the drawings:
Fig. 1 shows a first embodiment of a power supply circuit in accordance with the present invention;
Fig. 2 shows a second embodiment of a power supply circuit in accordance with the present invention;
Fig. 3 shows a third embodiment of a power supply circuit in accordance with the present invention; and
Fig. 4 shows a fourth embodiment of a power supply circuit in accordance with the present invention.

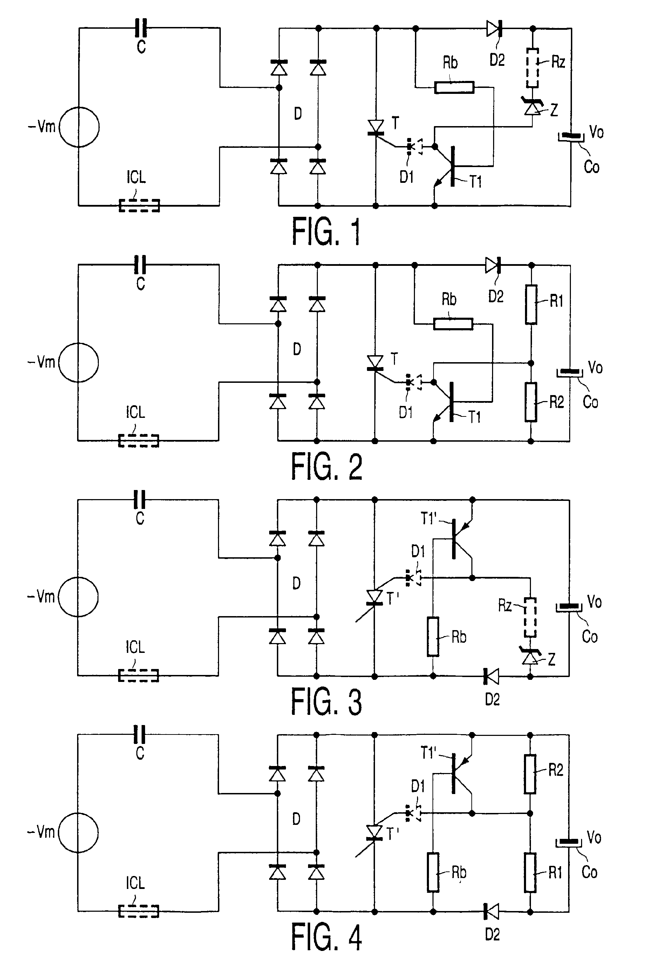

Fig. 1 shows a first embodiment of a power supply circuit in accordance with the present invention. A mains voltage source Vm is connected to a'diode bridge rectifier D thru a capacitor C and an optional inrush current limiter ICL. A thyristor T is connected across outputs of the diode bridge rectifier D. A series connection of a diode D2 and an electrolytic capacitor Co as also connected across outputs of the diode bridge rectifier D. An output voltage Vo is present across the electrolytic capacitor Co.

In accordance with the present invention, a simple control circuit is used to control the thyristor T in dependence upon the output voltage Vo. The control circuit includes a bipolar NPN transistor T1 having an emitter connected to a lower terminal of the electrolytic capacitor Co. A collector of the transistor T1 is connected to a gate of the thyristor T thru an optional diode D1, and to an upper terminal of the electrolytic capacitor Co thru a zener diode Z and an optional resistor Rz. A base of the transistor T1 is connected an anode of the thyristor T thru a resistor Rb.

Fig. 2 shows a second embodiment of a power supply circuit in accordance with the present invention. This second embodiment differs from the first embodiment in that instead of the zener diode Z and the resistor Rz, a series connection of two resistors R1 and R2 is present. This series connection is connected across the output capacitor Co. A connection point of the resistors R1 and R2 is connected to the collector of the transistor T1.

Fig. 3 shows a third embodiment of a power supply circuit in accordance with the present invention. This third embodiment is a dual version of the first embodiment. Instead of an NPN transistor T1, a PNP transistor T1' is present and all connections within the control circuit are altered in a corresponding manner.

Fig. 4 shows a fourth embodiment of a power supply circuit in accordance with the present invention. This fourth embodiment is a dual version of the second embodiment. Instead of an NPN transistor T1, a PNP transistor T1' is present and all connections within the control circuit are altered in a corresponding manner.

The working is as follows. Normally the 50 Hz capacitor current is charging the output electrolytic capacitor Co via diode D2. If the output voltage Vo reaches its required level, the controlled switch (in this case, a thyristor T) is switched on. From this moment, the capacitor current freewheels through the switch T, not causing any losses. If the output requires power again, the switch T will be opened. A full bridge rectifier D is used, allowing for utilization of both of the mains cycles.

The control of the switch T can be in such a way that only for full mains cycles the switch T is on or off (with a thyristor this is always the case), thus preventing oscillations. The other reason why a thyristor is preferred, is that it automatically goes out of conduction when its current is zero. This eliminates switch-off losses in the thyristor T and minimizes the EMC problems caused by switching-off.

By also switching on the thyristor T when its voltage is zero, the switch-on losses are eliminated too as well as the EMC problems that come with it. To this end, in accordance with the present invention, the thyristor T is controlled in such a manner that it is switched on when its voltage is zero. The result is an ultra low-cost capacitive down-converter that has very low losses even at low load such as at standby, and an optimized EMC behavior.

The transistor T1 keeps the control voltage of the thyristor T low until the voltage over the thyristor T reaches zero; thereafter the thyristor T is allowed to go into the conducting state. The thyristor T is "off" until the transistor T1 is "off". The output voltage Vo over the output capacitor Co is determined by the zener diode Z or by means of a voltage division resulting from the use of the series resistors R1, R2. The optional diode Dl serves to increase the threshold voltage of the thyristor T from 1.0 V to 1.7 V. The optional resistor Rz serves to limit the current thru the zener diode Z.

It should be noted that the above-mentioned embodiments illustrate rather than limit the invention, and that those skilled in the art will be able to design many alternative embodiments without departing from the scope of the appended claims. The thyristor T may be replaced by any other active switch, such as a (MOS) (field-effect) transistor. The (bipolar) transistor T1 may be replaced by any other active switch, such as a (MOS) field-effect transistor or a thyristor. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware.

## Claims

1. A power supply circuit, comprising:
a rectifier unit (D) for rectifying an AC mains voltage (Vm);
a first switch (T) coupled across first and second outputs of the rectifier unit (D); and
a control circuit (T1, T1', Rb) for controlling the first switch (T) in such a manner, that the first switch (T) is switched on when a voltage over the first switch (T) is substantially zero, the control circuit (T1, T1', Rb) including:
a second switch (T1, T1') having a main current path between a control terminal of the first switch (T) and the first output of the rectifier unit; and
a resistor (Rb) between a control terminal of the second switch (T1, T1') and the second output of the rectifier unit (D).

2. A power supply circuit as claimed in claim 1, wherein the first switch (T) is a thyristor.

3. A power supply circuit as claimed in claim 1, wherein the second switch (T1, T1') is a bipolar transistor.

4. A power supply circuit as claimed in claim 1, wherein a diode (D1) is connected between the control terminal of the first switch (T) and the second switch (T1, T1').
